# EUROPÄISCHE PATENTANMELDUNG

(11) **EP 0 678 729 A1**
(43) Veröffentlichungstag der Anmeldung: **25.10.1995**
(21) Anmeldenummer: 95810240.2
(22) Anmeldetag: 10.04.1995
(51) Int. Cl.: G01B 21/08, G01B 5/06, G01B 11/06, B65H 7/12

(54) **Dickenmessverfahren**

(30) Priorität: 18.04.1994 CH 1162/94
(71) Anmelder: GRAPHA-HOLDING AG, CH-6052 Hergiswil (CH)
(72) Erfinder: Zens, Rene, Newport News VA 23602 (US)

(57) **Zusammenfassung**

Die Erfindung bezieht sich auf ein Verfahren zur Messung der Dicke zwischen zwei einander gegenüberliegenden Begrenzungsflächen einer Materialschicht sowie auf eine entsprechende Vorrichtung. Bei dem Verfahren wird die Materialschicht mit ihrer einen Begrenzungsfläche relativ zu einem Detektor auf einer festgelegten, quer zur Dickenrichtung verlaufenden Bahn bewegt. Im Verlauf dieser Bahn durchschreitet ein bezüglich der der einen Begrenzungsfläche gegenüberliegenden anderen Begrenzungsfläche festgelegter Messkörper den Erfassungsbereich des Detektors und löst dabei ein den Eintritt und den Austritt bezüglich des Erfassungsbereichs anzeigendes Eintritts- bzw. Austrittssignal aus. Zumindest eines dieser Signale hängt von der Dicke der zu vermessenden Materialschicht ab. Aus den vom Detektor abgegebenen Signalen wird anschliessend ein die Dicke der Schicht darstellender Wert gebildet.

## Beschreibung

Diese Erfindung betrifft ein Verfahren zur Messung der Dicke zwischen zwei einander gegenüberliegenden Begrenzungsflächen einer Materialschicht sowie eine Vorrichtung zur Durchführung eines solchen Verfahrens.

Herkömmlicherweise wird die Dicke einer Materialschicht mit Hilfe einer Schieblehre, einer Mikrometerschraube oder ähnlicher Messgeräte bestimmt. Dabei ist es erforderlich, dass die zu vermessende Materialschicht bezüglich des Messgerätes stillsteht. Ferner ist es dabei im allgemeinen notwendig, dass zwei gegenüberliegende Begrenzungsflächen der Schicht für die Messung zugänglich sind. Beide Voraussetzungen sind im allgemeinen nur schwer erfüllbar, wenn es sich bei der zu vermessenden Schicht um ein sich während eines Produktionsvorganges bewegendes Zwischenprodukt handelt, dessen Dicke für Kontrollzwecke bestimmt werden muss.

Die Aufgabe der vorliegenden Erfindung besteht daher in der Schaffung eines Verfahrens der eingangs genannten Art, mit dem die Dicke einer Materialschicht während eines Produktionsvorganges auf einfache Weise gemessen werden kann, sowie in der Schaffung einer Vorrichtung zur Durchführung eines solchen Verfahrens.

Erfindungsgemäss wird diese Aufgabe durch ein Verfahren der eingangs genannten Art gelöst, bei dem die Materialschicht mit ihrer einen Begrenzungsfläche relativ zu einem Detektor auf einer festgelegten, quer zur Dickenrichtung verlaufenden Bahn bewegt wird, längs der ein bezüglich der der einen Begrenzungsfläche gegenüberliegenden anderen Begrenzungsfläche festgelegter Messkörper den Erfassungsbereich des Detektors durchschreitet und dabei ein den Eintritt und den Austritt bezüglich des Erfassungsbereichs anzeigendes Eintritts- bzw. Austrittssignal des Detektors auslöst, von denen zumindest eines dickenabhängig ist und aus denen ein die Dicke der Schicht darstellender Wert gebildet wird.

Da bei der Erfindung die Materialschicht mit ihrer sie in Dikkenrichtung begrenzenden einen Begrenzungsfläche auf einer festgelegten Bahn bewegt wird, ist die Bewegungsbahn der dieser einen Begrenzungsfläche gegenüberliegenden anderen Begrenzungsfläche eindeutig durch die festgelegte Bahn und die Dicke der Materialschicht bestimmt. Weil die festgelegte Bahn bekannt ist, reicht es zur Bestimmung der Dicke der Materialschicht aus, die Bewegungsbahn der anderen Begrenzungsfläche zu bestimmen.

Zu diesem Zweck wird erfindungsgemäss ein Messkörper bezüglich der anderen Begrenzungsfläche so festgelegt, dass er den Erfassungsbereich eines Detektors, relativ zu welchem sich die eine Begrenzungsfläche auf einer festgelegten Bahn bewegt, durchschreitet. Die Bewegungsbahn der anderen Begrenzungsfläche kann dann eindeutig durch den Eintritt des Messkörpers in den Erfassungsbereich des Detektors und dessen Austritt daraus bestimmt werden, weil zumindest eines dieser Ereignisse dikkenabhängig eintritt, so dass ein die Dicke der Materialschicht darstellender Wert auf der Grundlage der entsprechenden von dem Detektor abgegebenen Eintritts- und Austrittssignale erzeugt werden kann.

Das beschriebene Verfahren weist gegenüber den bekannten Messverfahren den Vorteil auf, dass ein zur Bestimmung der Materialschichtdicke zu verwendender Detektor nicht mit der Materialschicht zu bewegen ist, sondern gerade die Bewegung der Materialschicht relativ zum Detektor zur Dickenbestimmung ausgenutzt wird. Aufgrund dieses Umstandes kann die Messung von Materialschichtdicken während eines Produktionsvorgangs wesentlich vereinfacht werden, wodurch sich die Herstellungskosten entsprechender Produktionsmaschinen verringern lassen und/oder die Produktionsgeschwindigkeit erhöht werden kann. Ferner ist es für die Durchführung des erfindungsgemässen Verfahrens nicht notwendig, dass gegenüberliegende Begrenzungsflächen der zu vermessenden Materialschicht für die Messung zugänglich sind. Vielmehr kann die Vermessung von Materialschichten mit dem erfinderischen Verfahren gerade dadurch ermöglicht werden, dass eine Seite der Materialschicht während eines Produktionsvorgangs bezüglich einer entsprechenden bewegbaren Halteeinrichtung festgelegt wird, so dass sie nicht mehr für eine Messung zugänglich ist, weil dadurch die Bewegungsbahn dieser Begrenzungsfläche bestimmt werden kann.

Eine erfindungsgemässe Vorrichtung zur Durchführung des vorstehend beschriebenen Verfahrens umfasst einen Detektor, eine Einrichtung zum Bewegen einer eine Materialschicht in Dickenrichtung begrenzenden Begrenzungsfläche relativ zu dem Detektor auf einer festgelegten, quer zur Dickenrichtung verlaufenden Bahn, einen Messkörper, der bezüglich der der einen Begrenzungsfläche gegenüberliegenden anderen Begrenzungsfläche der Materialschicht so festlegbar ist, dass er im Verlauf der Bewegungsbahn den Erfassungsbereich des Detektors durchschreitet, wobei er ein den Eintritt und ein den Austritt bezüglich des Erfassungsbereichs anzeigendes Eintritts- bzw. Austrittssignal des Detektors auslöst, von denen zumindest eines dikkenabhängig ist, und eine auf die von dem Detektor abgegebenen Signale ansprechende Signalverarbeitungseinrichtung zum Erzeugen eines die Dicke der Materialschicht darstellenden Wertes auf der Grundlage des Eintrittssignals und des Austrittssignals.

Wenn die Geschwindigkeit der einen Begrenzungsfläche auf der festgelegten Bewegungsbahn bekannt ist, reicht es zur eindeutigen Bestimmung der Dicke der Materialschicht aus, den die Dicke darstellenden Wert auf der Grundlage eines Zeitabstandes zwischen Abgabe Eintrittssignals und Abgabe des Austrittssignals zu erzeugen.

Die in der erfindungsgemässen Vorrichtung enthaltene Signalverarbeitungseinrichtung weist zu diesem Zweck vorteilhafterweise einen Zähler zum Erzeugen eines diesen Zeitabstand darstellenden Zählwertes auf.

Häufig ist es während eines Produktionsvorgangs auf einfache Weise möglich, die Bewegungsgeschwindigkeit der einen Begrenzungsfläche auf der festgelegten Bahn dem Betrage nach konstant zu halten, ohne dass jedoch dieser Betrag genau bekannt ist. In diesem Fall kann die Dicke einer Materialschicht mit Hilfe des erfindungsgemässen Verfahrens bestimmt werden, wenn zusätzlich zum Messkörper ein bezüglich der anderen Begrenzungsfläche festgelegter weiterer Messkörper vorgesehen ist, der nach dem Austritt des Messkörpers aus dem Erfassungsbereich des Detektors in diesen eintritt und dabei ein weiteres Eintrittssignal des Detektors auslöst, und zur Bildung des die Dicke darstellenden Wertes zusätzlich der zwischen der Abgabe des Austrittssignals und der Abgabe des weiteren Eintrittssignals liegende Zeitabstand verwendet wird. Mit Hilfe dieses weiteren Zeitabstandes kann die Geschwindigkeitsabhängigkeit aus der Bestimmungsgleichung für die Dicke der Materialschicht eliminiert werden. Bei einer bekannten Geometrie der Messanordnung ist es dann möglich, eine Materialschichtendicke eindeutig aus nur zwei gemessenen Zeitabständen zu bestimmen.

Eine erfindungsgemässe Vorrichtung zur Durchführung des zuletzt beschriebenen Verfahrens ist im wesentlichen gekennzeichnet durch einen weiteren Messkörper, der bezüglich der anderen Begrenzungsfläche so festlegbar ist, dass er im Verlauf der festgelegten Bewegunsbahn nach Austritt des Messkörpers aus dem Erfassungsbereich des Detektors darin eintritt, und dadurch, dass die Signalverarbeitungseinrichtung einen weiteren Zähler zum Bilden eines einen weiteren Zeitabstand zwischen der Abgabe des Austrittssignals und der Abgabe eines beim Eintritt des weiteren Messkörpers in den Erfassungsbereich des Detektors abgegeben weiteren Eintrittssignals darstellenden Zählwertes und eine Einrichtung zum Verknüfpen der beiden Zählwerte zum Bilden des die Dicke der Materialschicht darstellenden Wertes als Ergebnis der Verknüpfung aufweist.

Im allgemeinen werden in einem Produktionsabschnitt während eines Produktionszyklus nur Materialschichten konstanter Dicke erwartet. Für Kontrollzwecke reicht es dann aus, dass der mit dem erfindungsgemässen Verfahren erhaltene, die Dicke der Materialschicht darstellende Wert mit einem vorgegebenen Bezugswert verglichen und ein das Ergebnis des Vergleichs anzeigendes Kontrollsignal erzeugt wird. Diese Vorgehensweise weist den besonderen Vorteil auf, dass zur Durchführung einer wirksamen Kontrolle die Geometrie der für die Durchführung des Verfahrens geeigneten Vorrichtung nicht detailliert bekannt sein muss. Vielmehr reicht es aus, eine einmalige Kalibrierung der Vorrichtung zur Festlegung des Bezugswertes und eine Einrichtung zum Vergleichen des die Dicke darstellenden Wertes mit dem Bezugswert aus.

Moderne Prosuktionsverfahren arbeiten darüber hinaus so zuverlässig, dass bei ihnen nur in Ausnahmefällen Abweichungen von einer gewünschten Materialstärke zu registireren sind. Daher kann bei Verwendung des erfindungsgemässen Verfahrens häufig eine Selbstkalibrierung vorgenommen werden, indem der Bezugswert durch Mittelwertbildung einer Anzahl von zuvor bestimmten, die Dicke von Materialschichten darstellenden Werten erzeugt wird. Die entsprechende Vorrichtung weist dazu eine geeignete Mittelwertbildungseinrichtung, mit der entsprechende Mittelwerte gebildet und in die Speichereinrichtung eingegeben werden können, auf.

Zur Erhöhung der Genauigkeit kann vorgesehen werden, dass zur Mittelwertbildung nur diejenigen Werte verwendet werden, die innerhalb eines festgelegten Toleranzbereichs liegen.

Zweckmässigerweise weist der Detektor bei einer erfindungsgemässen Vorrichtung eine Lichtschranke auf, durch die der Messkörper und ggf. der weitere Messkörper im Verlauf der festgelegten Bewegungsbahn hindurchtritt. Ein derartig aufgebauter Detektor ermöglicht eine berührungsfreie Kontrollmessung. Dadurch wird ein Einfluss der Kontrollmessung auf den Produktionsablauf ausgeschlossen.

Zur Erhöung der Messgenauigkeit ist es dabei besonders vorteilhaft, wenn die Lichtschranke eine Lichtquelle, z.B. eine Superbright-LED, eine Fokussiereinrichtung zum Fokussieren des von der Lichtquelle abgegebenen Lichtes auf eine ggf. von einem Saphirfenster abgedeckte Stirnfläche einer Lichtleiterfaser, ein schnell ansprechendes photoempfindliches Halbleiterelement sowie ein Schwellwertelement, z.B. einen Schmitt-Trigger, aufweist, wobei der Messkörper und ggf. der weitere Messkörper zur Messung den Strahlengang zwischen Fokussiereinrichtung und der Stirnfläche der Lichtleiterfaser zumindest teilweise unterbrechen können.

Ein in der erfindungsgemässen Vorrichtung benutzter Messkörper kann beispielsweise so gestaltet sein, dass sein vom Detektor erfasstes Profil quer zur Bahn und in der sich in Dickenrichtung erstreckenden Ausdehung sich längs der festgelegten Bahn stetig ändert. Bei einem so ausgestalteten Messkörper wird die Dicke der Materialschicht durch die Wegstrecke bestimmt, während der sich der Messkörper im Erfassungsbereich des Detektors befindet.

Besonders vorteilhaft ist es, wenn das Profil sich mit veränderlicher Steigung ändert. Dann kann unter Verwendung desselben Messkörpers ein grosser Dickenbereich mit annähernd gleichbleibender Genauigkeit erfasst werden.

Schliesslich ist es für die weitere Auswertung der Messsignale zweckmässig, wenn die Begrenzungsfläche, an der der Messkörper und/oder der weitere Messkörper in den Erfassungsbereich des Detektors eintritt, senkrecht zur weiteren Begrenzungsfläche der zu vermessenden Schicht verläuft. In diesem Fall werden die in der erfindungsgemässen Vorrichtung von den Zählern erfassten Zeitabstände ausschliesslich durch das sich ändernde Profil des Messkörpers bestimmt. Die Kenntnis dieses Verlaufs reicht daher in diesem Fall zur eindeutigen Bestimmung der Dicke der Materialschicht aus.

Nachfolgend wird die Erfindung unter Bezugnahme auf die Zeichnung, auf die an dieser Stelle bezüglich aller in der Beschreibung nicht näher erwähnten Einzelheiten ausdrücklich verwiesen wird, erläutert. In der Zeichnung zeigt:
- Fig. 1: eine seitliche Schnittansicht eines mit einer erfindungsgemässen Vorrichtung ausgestatteten Anlegers für Druckbogen,
- Fig. 2: eine entlang der Linie A - A in Fig. 1 genommene Schnittansicht eines in der Ausführungsform nach Fig. 1 verwendeten Detektors, und
- Fig. 3: eine detaillierte Darstellung des in der Ausführungform von Fig. 1 verwendeten Messkörpers.

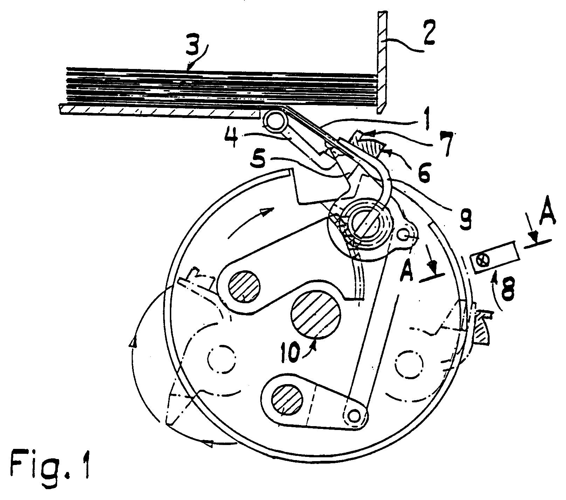

Anleger für Druckbogen der in Fig. 1 gezeigten Art sind beispielsweise aus der CH - PS 641 112 bekannt und werden in dieser Schrift eingehend beschrieben. Daher wird im folgenden nur auf die für die vorliegende Erfindung wesentlichen Eigenschaften derartiger Anleger eingegangen. Mit einem in der Fig. 1 dargestellten Anleger werden zunächst einzelne Druckbogen 1 von einem in einem Druckbogenmagazin 2 liegenden Druckbogenstapel 3 mit Hilfe eines Vereinzelungsorgans 4 gelöst. Ein auf diese Weise von dem Druckbogenstapel 3 gelöster Druckbogen 1 wird auf nicht näher beschriebene Weise zwischen eine Wange 5 und einen Greiferhebel 9 geklemmt. Die Wange 5 und der Greiferhebel 9 sind an einer sich um eine Welle 10 drehenden Greifertrommel so angebracht, dass die Wange 5 und somit auch die gegen diese Wange geklemmte Begrenzungsfläche des Druckbogens 1 auf einer festgelegten Bahn geführt wird. Diese festgelegte Bahn wird bei dem gezeigten Anleger näherungsweise durch ein Kreisbogensegment beschrieben.

Zur Kontrolle, ob die gewünschte Anzahl von Druckbogen erfasst wurde, ist der in Fig. 1 dargestellte Anleger mit einer erfindungsgemässen Vorrichtung, bestehend aus einem Messkörper 6, einem weiteren Messkörper 7 und einem Detektor 8, versehen. Der Messkörper 6 und der einstückig damit gebildete weitere Messkörper 7 sind an der dem Druckbogen abgewandten Seite des Greiferhebels 9 angeordnet, welcher seinerseits an der der Wange 5 abgewandten Begrenzungsfläche des Druckbogens 1 anliegt. Somit ist die Stellung des Messkörpers 6 und des weiteren Messkörpers 7 bezüglich dieser Fläche des Bogens 1 festgelegt.

Die Bewegungsbahn dieser Messkörper wird ausschliesslich von der Bewegungsbahn der Wange 5, der Form des Greiferhebels 9 und der Dicke des Druckbogens 1 bestimmt. Bei bekannter Geometrie des Anlegers lässt sich daher die Dicke des Druckbogens 1 über eine Charakterisierung der Bewegungsbahn der Messkörper bestimmen. Diese Bewegungsbahn wird bei der dargestellten Ausführungsfom der Erfindung mit Hilfe des als Lichtschranke ausgebildeten Detektors 8 charakterisiert, indem zunächst der Eintritt des Messkörpers 6 in die Lichtschranke, dann der Austritt des Messkörpers 6 aus der Lichtschranke und schliesslich der Eintritt des weiteren Messkörpers 7 in die Lichtschranke nachgewiesen und die jeweils zwischen Eintritt und Austritt bzw. Austritt und Eintritt liegenden Zeitabstände erfasst werden. Unter der Annahme, dass der Geschwindigkeitsverlauf der Wange 5 konstant, aber nicht näher bekannt ist, kann aus diesen Zeitabständen die Dicke des Druckbogens 1 bestimmt werden, sofern die Geometrie des Anlegers bzw. der Messvorrichtung bekannt ist. Bei der in Fig. 1 dargestellten Ausführungsform wird die Geschwindigkeit der Wange 5 beispielsweise in konstanter, aber nicht näher bekannter Weise entlang der festgelegten Bewegungsbahn bezüglich Betrag und Richtung geändert.

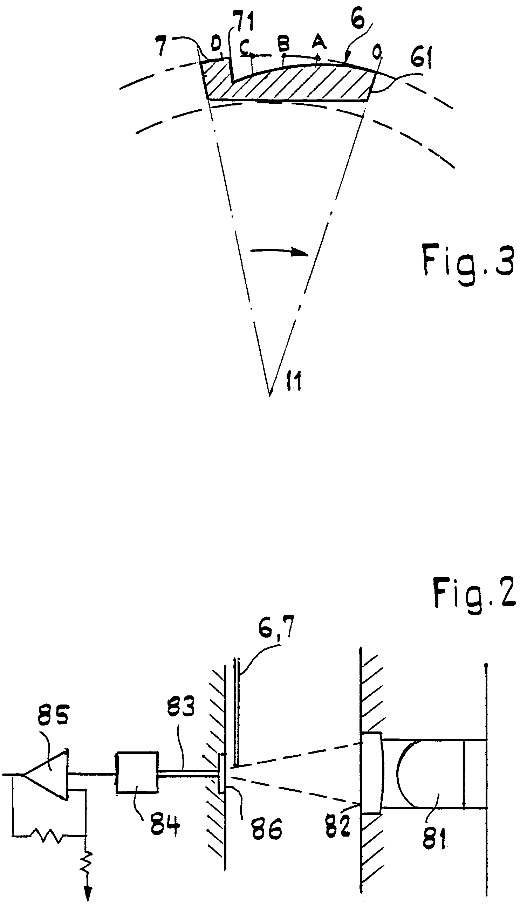

Unter Bezugnahme auf Fig. 2 wird nun der Aufbau des Detektors 8 näher beschrieben. Dieser als Lichtschranke ausgebildete Detektor enthält eine Superbright-LED 81, eine Kollimatorlinse 82 zum Fokussieren des von der LED 81 abgegebenen Lichtes auf die Stirnfläche einer Lichtleiterfaser 83 und einen mit der Lichtleiterfaser verbundenen, schnell ansprechenden Phototransistor oder eine derartige Photodiode 84. Der Ausgang des Phototransistors bzw. der Photodiode 84 ist mit dem Eingang eines Schmitt-Triggers 85 verbunden. Wenn nun der Messkörper 6, 7 die zwischen der Linse 82 und der Lichtleiterfaser 83, deren Stirnfläche von einem Saphirfenster 86 geschützt ist, gebildete Lichtschranke durchschreitet, wird dann, wenn der Messkörper 6, 7 die zwischen der Linse 82 und der Lichtleiterfaser 83, deren Stirnfläche von einem Saphirfenster 86 geschützt ist, gebildete Lichtschranke durchschreitet, wird dann, wenn der Messkörper 6 die Stirnfläche der Lichtleiterfaser 83 zu einem bestimmten Ausmass abdeckt, der Ausgang des Schmitt-Triggers von einem negativen Signal auf ein positives Signal geschaltet. Wenn der Messkörper 6 danach eine festgelegte Fläche des Saphirfensters im Verlauf der festgelegten Bewegungsbahn wieder freigibt, wird der Ausgang des Schmitt-Triggers wieder auf einen negativen Wert geschaltet, um schliesslich bei einer erneuten Abdeckung des Saphirfensters 86 um ein festgelegtes Ausmass durch den weiteren Messkörper 7 erneut auf einen positiven Wert geschaltet zu werden.

Mit Hilfe einer dem Schmitt-Trigger nachgeschalteten Auswerteschaltung werden die zwischen den einzelnen Umschaltungen liegenden Zeitabstände T₁ und T₂ gemessen und daraus der Quotient T₁/T₁+T₂) gebildet. Aus diesem Quotienten lässt sich unter der Annahme, dass die Geometrie der Anordnung bekannt und die Geschwindigkeit der Messkörper konstant ist, die Dicke des Druckbogens 1 eindeutig bestimmen.

Bei dem beschriebenen Anleger ist es notwendig, dass mit der Messvorrichtung die Dicke eines Druckbogens (etwa 0,1 mm) von der Dicke zweier übereinanderliegender Druckbogen (etwa 0,2 mm) unterschieden werden kann. Zu diesem Zweck ist die aus der Lichtleiterfaser 83, dem Phototransistor bzw. der Photodiode 84 und dem Schmitt-Trigger 85 bestehende Nachweisanordnung so gestaltet, dass eine einen Schaltvorgang des Schmitt-Triggers 85 auslösende Abdeckung der einen Durchmesser von 0,25 mm aufweisenden Stirnfläche der Lichtleiterfaser 83 mit einer Genauigkeit von 1/10 dieses Durchmessers, also mit einer Genauigkeit von ± 0,025 mm, festgelegt ist.

Zum Erfassen der beschriebenen Zeitabstände werden in der dem Schmitt-Trigger nachgeschalteten, in der Figur nicht näher dargestellten Auswerteschaltung zwei Zähler benutzt, von denen der eine während des Zeitintervalls T₁ zwischen Eintritt und Austritt des Messkörpers 6 in die Lichtschranke bzw. daraus und der andere während des Zeitintervalls T₂ zwischen Austritt des Messkörpers 6 aus der Lichtschranke und Eintritt des weiteren Messkörpers 7 darin betrieben wird. Unter der Annahme, dass die Umlaufgeschwindigkeit der Greifertrommel 20'000 Umdrehungen/Stunde und ihr Durchmesser 200 mm beträgt und der Durchgang der Messkörper 6, 7 durch die Lichtschranke in Intervallen von etwa 0,3 mm abzutasten ist, müssen die Zähler zum Erhalt der gewünschten Genauigkeit in Zeitabständen von 100 µs inkrementiert werden. Bildet man aus den entsprechenden Zählwerten C₁ und C₂ den Quotienten C₁/(C₁+C₂), lässt sich daraus direkt die Dicke des Druckbogens 1 bestimmen, wenn die Geometrie der Anordnung bekannt ist.

Für Kontrollmessungen während eines laufenden Produktionszyklus' werden die Zähler jeweils kurz vor Eintritt des Messkörpers 6 in die Lichtschranke mit Hilfe eines von einem nicht dargestellten Papierdetektor abgegebenen Signals zurückgesetzt. Der Papierdetektor kann beispielsweise in Form einer Photozelle gebildet sein.

Häufig ist es jedoch nicht erforderlich, den Absolutwert der Dicke einer Materialschicht zu bestimmen. Dann kann eine Selbstkalibrierung der Messvorrichtung erfolgen, indem zunächst beispielsweise drei Druckbogen aufeinanderfolgend von dem Druckbogenstapel 3 abgezogen werden und zu diesen Druckbogen gehörige Werte bestimmt werden. Anschliessend werden diese drei Werte miteinander verglichen und, falls die Abweichungen untereinander innerhalb eines festgelegten Toleranzbereichs liegen, wird ein Mittelwert dieser Werte gebildet. Zur anschliessenden Prüfung der danach vom Druckbogenstapel 3 abgezogenen Druckbogen werden dann die zu diesen Druckbogen gehörigen Werte mit dem Mittelwert verglichen. Wenn diese Werte sich um mehr als eine festgelegte Toleranz von dem durch den Mittelwert gebildeten Bezugswert unterscheiden, wird dieses angezeigt. Ferner kann der Bezugswert durch Verwendung aller innerhalb des Toleranzbereichs liegender Werte zur Mittelwertbildung fortlaufend aktualisiert werden. Bei dieser Betriebsart ist neben einer anfänglichen Justage des Detektors 8 bezüglich der festgelegten Bahn der Wange 5 zur Gewährleistung eines zuverlässigen Betriebes nur noch die regelmässige Reinigung des Saphirfensters 86 notwendig.

Abschliessend werden nun unter Bezugnahme auf Fig. 3 die in der Ausführungsform nach Fig. 1 verwendeten Messkörper näher beschrieben.

Wie der Fig. 3 zu entnehmen ist, verläuft die vordere Stirnfläche 61 des Messkörpers 6 in einer die Drehachse 11 der Welle 10 enthaltenden Ebene. Im Anschluss an die Stirnfläche 61 verringert sich die radiale Dicke des Messkörpers 6 mit sich ändernder Steigung, und zwar so, dass sie bis zu einem in einem Abstand von 20 mm von der Stirnfläche 61 angeordneten Punkt A um lediglich 1 mm abnimmt, sich bis zu einem 30 mm von der Stirnfläche 61 entfernten Punkt B um 2 mm verringert, bis zu einem 40 mm von der Strinfläche 61 entfernt angeordneten Punkt C um 3,5 mm abnimmt und sich schliesslich bis zu einem 50 mm von der Stirnfläche 61 entfernt angeordneten Punkt D um 6 mm verringert. Im Anschluss an den Punkt D ist die ebenfalls in einer die Drehachse 11 der Welle 10 enthaltenden Ebene verlaufende Strinfläche 71 des weiteren Messkörpers 7 angeordnet. Durch die Ausrichtung der Stirnfläche 61 und 71 so, dass diese senkrecht zu der der Wange 5 abgewandten Begrenzungsfläche des zu vermessenden Bogens verlaufen, wird erreicht, dass die Zeitabstände T₁ und T₂ lediglich durch das die Punkte A, B, C und D passierende Profil des Messkörpers 6 quer zur Bahn und in der sich in Dickenrichtung erstreckenden Ausdehnung bestimmt werden. Dadurch kann eine weitere Auswertung der Messergebnisse auf einfache Weise durchgeführt werden. Durch die besondere Ausgestaltung des Messkörpers 6 ist es ferner möglich, ohne nennenswerte Genauigkeitsschwankungen mit demselben Messkörper den Unterschied zwischen einem 0,1 mm dicken Druckbogen und zwei übereinanderliegenden Druckbogen, die insgesamt eine Dicke von 0,2 mm aufweisen, sowie den Unterschied zwischen einem beispielsweise etwa 3 mm dicken Papierstapel und einem etwa 6 mm dicken Doppelstapel zu erkennen.

## Patentansprüche

1. Verfahren zur Messung der Dicke zwischen zwei einander gegenüberliegenden Begrenzungsflächen einer Materialschicht, dadurch gekennzeichnet, dass die Materialschicht mit ihrer einen Begrenzungsfläche relativ zu einem Detektor auf einer festgelegten, quer zur Dickenrichtung verlaufenden Bahn bewegt wird, längs der ein bezüglich der der einen Begrenzungsfläche gegenüberliegenden anderen Begrenzungsfläche festgelegter Messkörper den Erfassungsbereich des Detektors durchschreitet und dabei ein den Eintritt und den Austritt bezüglich des Erfassungsbereichs anzeigendes Eintritts- bzw. Austrittssignal des Detektors auslöst, von denen zumindest eines dickenabhängig ist und aus denen ein die Dicke der Schicht darstellender Wert gebildet wird.

2. Verfahren nach Anspruch 1, dadurch gekennzeichnet, dass der die Dicke darstellende Wert aus dem Zeitabstand zwischen der Abgabe des Eintrittssignals und der Abgabe des Austrittssignals gebildet wird.

3. Verfahren nach Anspruch 2, dadurch gekennzeichnet, dass zusätzlich zum Messkörper ein bezüglich der anderen Begrenzungsfläche festgelegter weiterer Messkörper vorgesehen ist, der nach dem Austritt des Messkörpers aus dem Erfassungsbereich des Detektors in diesen eintritt und dabei ein weiteres Eintrittssignal des Detektors auslöst, und zur Bildung des die Dicke darstellenden Wertes zusätzlich der zwischen der Abgabe des Austrittssignals und der Abgabe des weiteren Eintrittssignals liegende Zeitabstand verwendet wird.

4. Verfahren nach einem der vorhergehenden Ansprüche, dadurch gekennzeichnet, dass ein Kontrollsignal durch Vergleich des die Dicke der Materialschicht darstellenden Wertes mit einem vorgegebenen Bezugswert gebildet wird.

5. Verfahren nach Anspruch 4, dadurch gekennzeichnet, dass der Bezugswert durch Mittelwertbildung einer Anzahl von zuvor gebildeten, die Dicke von Materialschichten darstellenden Werten erzeugt wird.

6. Verfahren nach Anspruch 5, dadurch gekennzeichnet, dass zur Mittelwertbildung nur innerhalb eines festgelegten Toleranzbereichs liegende Werte verwendet werden.

7. Vorrichtung zur Durchführung des Verfahrens nach einem der vorhergehenden Ansprüche, gekennzeichnet durch:
einen Detektor (8),
eine Einrichtung (5, 9) zum Bewegen einer eine Materialschicht (1) in Dickenrichtung begrenzenden Begrenzungsfläche relativ zu dem Detektor (8) auf einer festgelegten, quer zur Dickenrichtung verlaufenden Bahn,
einen Messkörper (6), der bezüglich der der einen Begrenzungsfläche gegenüberliegenden anderen Begrenzungsfläche der Materialschicht so festlegbar ist, dass er im Verlauf der Bewegungsbahn den Erfassungsbereich des Detektors (8) durchschreitet, wobei er ein den Eintritt und ein den Austritt bezüglich des Erfassungsbereichs anzeigendes Eintritts- bzw. Austrittssignal des Detektors (8) auslöst, von denen zumindest eines dickenabhängig ist, und eine auf die von dem Detektor abgegebenen Signale ansprechende Signalverarbeitungseinrichtung zum Erzeugen eines die Dicke der Materialschicht darstellenden Wertes auf der Grundlage des Eintrittssignals und des Austrittssignals.

8. Vorrichtung nach Anspruch 7, dadurch gekennzeichnet, dass die Signalverarbeitungseinrichtung einen Zähler zum Bilden eines einen Zeitabstand (T₁) zwischen Abgabe des Eintrittssignals und Abgabe des Austrittssignals darstellenden Zählwertes aufweist.

9. Vorrichtung nach Anspruch 8, gekennzeichnet, durch einen weiteren Messkörper (7), der bezüglich der anderen Begrenzungsfläche so festlegbar ist, dass er im Verlauf der festgelegten Bewegungsbahn nach Austritt des Messkörpers (6) aus dem Erfassungsbereich des Detektors (8) darin eintritt, und dadurch, dass die Signalverarbeitungseinrichtung einen weiteren Zähler zum Bilden eines einen weiteren Zeitabstand (T₂) zwischen der Abgabe des Austrittssignals und der Abgabe eines beim Eintritt des weiteren Messkörpers (7) in den Erfassungsbereich des Detektors (8) abgegebenen weiteren Eintrittssignals darstellenden Zählwertes und eine Einrichtung zum Verknüpfen der beiden Zählwerte zum Bilden des die Dicke der Materialschicht darstellenden Wertes als Ergebnis der Verknüpfung aufweist.

10. Vorrichtung nach einem der Ansprüche 7 bis 9, dadurch gekennzeichnet, dass der Detektor (8) eine Lichtschranke (81, 82, 83, 84, 85, 86) aufweist, durch die der Messkörper (6) und ggf. der weitere Messkörper (7) im Verlauf der festgelegten Bewegungsbahn hindurchtritt.

11. Vorrichtung nach Anspruch 10, dadurch gekennzeichnet, dass die Lichtschranke eine Lichtquelle (81), z.B. eine Superbright-LED, eine Fokussiereinrichtung (82) zum Fokussieren des von der Lichtquelle (81) abgegebenen Lichtes auf eine ggf. von einem Saphirfenster (86) abgedeckte Stirnfläche einer Lichtleiterfaser (83), ein schnell ansprechendes photoempfindliches Halbleiterelement (84) sowie ein Schwellwertelement (85), z.B. einen Schmitt-Trigger, aufweist, wobei der Messkörper (6) und ggf. der weitere Messkörper (7) zur Messung den Strahlengang zwischen Fokussiereinrichtung (82) und der Stirnfläche der Lichtleiterfaser (83) zumindes teilsweise unterbrechen können.

12. Vorrichtung nach einem der Ansprüche 7 bis 11, dadurch gekennzeichnet, dass der Messkörper (6) ein vom Detektor (8) erfassbares und zur Auslösung des dickenabhängigen Signals dienendes Profil aufweist, dessen Abmessung in der Dickenrichtung sich längs der festgelegten Bahn stetig ändert.

13. Vorrichtung nach Anspruch 12, dadurch gekennzeichnet, dass die Änderung der Abmessung des Profils in der Dickenrichtung mit veränderlicher Steigung erfolgt.

14. Vorrichtung nach einem der Ansprüche 7 bis 13, dadurch gekennzeichnet, dass die Begrenzungsfläche, an der der Messkörper (6) und/oder der weitere Messkörper (7) in den Erfassungsbereich des Detektors (8) eintritt, senkrecht zur weiteren Begrenzungsfläche der zu vermessenden Materialschicht verläuft.

15. Vorrichtung nach einem der Ansprüche 7 bis 14, gekennzeichnet durch eine Speichereinrichtung zum Speichern eines Bezugswertes und eine Einrichtung zum Vergleich des die Dicke darstellenden Wertes mit dem Bezugswert.

16. Vorrichtung nach Anspruch 15, gekennzeichnet durch eine Einrichtung zum Bilden des Mittelwertes einer Anzahl von die Dicke von Materialschichten darstellenden Werten und zum Eingeben des Mittelwertes in die Speichereinrichtung.

17. Vorrichtung nach Anspruch 16, dadurch gekennzeichnet, dass die Mittelwertbildungseinrichtung nur diejenigen Werte berücksichtigt, die innerhalb eines vorgegebenen Toleranzbereiches liegen.
